# EUROPEAN PATENT APPLICATION

(11) **EP 3 376 464 A1**
(43) Date of publication of application: **19.09.2018**
(21) Application number: 17203009.0
(22) Date of filing: 22.11.2017
(51) Int. Cl.: G06Q 50/10, G06Q 30/02

(54) **TRUST-BASED RESOURCE SHARING METHOD AND SYSTEM**

(30) Priority: 14.03.2017 KR 20170031764; 06.11.2017 KR 20170146846
(71) Applicant: Electronics and Telecommunications Research Institute, Daejeon 34129 (KR)
(72) Inventor: UM, Tai Won, Chungcheongbuk-do (KR); JO, Seng Kyoun, Sejong-si (KR); YOON, Young Seog, Daejeon (KR); LEE, Nam Kyung, Daejeon (KR); LEE, Hyun Woo, Seoul (KR); CHO, Cheol Hye, Daejeon (KR); HONG, Kang Woon, Seoul (KR)
(74) Representative: Betten & Resch

(57) **Abstract**

The present invention is a trust-based resource sharing method and system for managing resources such as accommodations, automobiles, bicycles, equipment, instruments, tools, furniture, and the like during the lease period, using the Internet and smart home technology. The invention, unlike the existing sharing economy approach (e.g., Airbnb, Uber, and the like) that simply links the owner (or lender) of the resource with the user (or tenant), allows a reliable service transaction between a resource provider (or lender) and a tenant, on the basis of the trust information analyzed through accumulated data collected through IoT sensors. The method and system of the present invention perform resource sharing transaction including procedures of creating and managing a trust grade of a user who uses resources, creating and managing a trust grade of resources, and controlling the use of resources based on the user trust grade and the resource trust grade.

## Description

### CROSS-REFERENCE TO RELATED APPLICATIONS

This application claims priority under 35 U.S.C. §119 to Korean Patent Application Nos. 10-2017-0031764 and 10-2017-0146846, respectively filed on 14^{th} March 2017 and 6^{th} November 2017, the disclosure of which is incorporated herein by reference in its entirety.

### TECHNICAL FIELD

The present invention relates to sharing economy service technology for allowing shared resources such as accommodations, automobiles, and the like to be leased to another person safely and conveniently by using ICT technology.

### BACKGROUND

Many sharing economy services such as Airbnb and Uber that temporarily connect offices, accommodations, automobiles, bicycles, equipment, instruments, tools, and furniture, owned by a particular person, to other people have recently emerged and show a high utilization rate.

Unlike that individuals use well-known hotels and car rental companies, because strangers have short-term lease of each other's house and automobile in the sharing economy world, a tenant must confront uncertainty and risk in using such lease service. Therefore, it becomes a big obstacle in using and spreading such a service. From the point of view of owner of resource, since a lender lends its resource to a complete stranger, the lender has concern about whether the complete stranger will use the resource cleanly and carefully according to the contracted terms.

Moreover, recently in Europe, US, etc., several previous researches on trust analysis and management using the user behavior data or the relationship data between users and use of trust information have been conducted in several fields such as offices, schools, automobiles, and the like.

### SUMMARY

Accordingly, the present invention provides a trust-based resource sharing method and system for managing resources such as accommodations, automobiles, bicycles, equipment, instruments, tools, furniture, and the like during the lease period using the Internet and smart home technology and allowing a reliable service transaction between a resource provider (or lender) and a tenant on the basis of the trust information analyzed through accumulated data collected by IoT sensors during the lease period, unlike the existing sharing economy approach (e.g., Airbnb, Uber, and the like) that simply links the owner (or lender) of the resource with the user (or tenant).

To achieve the above purpose, a method of utilizing trust information of a user and trust information of a resource itself through resource user's credit and social network activity analysis and of monitoring whether contract (e.g., contract on smoking, door lock, Internet, telephone, other facilities use) is complied with during the use of the resource, is added to a resource sharing transaction based on various technologies, such as IoT, smart home, advanced driver assistance system (ADAS), information & communication technology (ICT), etc., which is done between a resource provider (e.g., owner, manager, lender, and the like) and a resource user (e.g., tenant, and the like) through a resource sharing service intermediary that operates a sharing service web page or application (app) system (hereinafter "service system").

The outline of a resource sharing service of the present invention is as follows:
- Instead of a lender (or resource provider) or a tenant (or resource user), a service intermediary is responsible for management such as use permission limitation of resources (accommodations/office, automobiles, bicycles, various equipment/instruments, tools, furniture, and the like) according to a user's trust level (or trust grade);
- Utilization of objective IoT data analysis and the analysis result on resource management status (energy usage, whether a door is locked or not, smoking, and the like) during a resource use period;
- Confirmation on whether the service contract is actually observed through an IoT function, such as smoking, companion of pet animals, whether the number of contracted person is exceeded, safety observance, etc.;
- Identification check, criminal fact, bankruptcy and the like are investigated through the social security number, name, or address provided by a user at the time of registration in a trust-based resource sharing service according to the present invention, and reflected on trust information;
- Social relationship is analyzed based on the account of a social network (Facebook, Twitter, etc.) registered by a user in a trust-based resource sharing service of the present invention, and reflected on trust information;
- Dispute arbitration between lender and tenant through photograph or video registration and comparison before and after use of resource;
- The number of existing resource uses, period, and the like are reflected on trust information;
- Feedback score (e.g., 3 out of 5 stars) and complain history such as vandalism from a resource owner (or provider, or lender) are reflected on trust information;
- Trust information is linked to other service areas such as user's workplace, bank preferred member, communication company membership, etc.; and
- Calculation of a user trust grade by adding objective use status data collected from IoT sensor or the like and subjective data from a resource provider and by reflecting a past history;

The utilization of trust information in a resource sharing service of the present invention will be described in terms of each entity.
(1) Method of utilizing "user trust information" from the viewpoint of Resource Provider:
   - Set the minimum user trust grade of a user who is allowed to use provider's resource (e.g., select from 1 to 5 stars);
   - Resource use permission only for a user to be trusted; and
   - Suggest differentiated charges and resource use options according to a user trust grade. (For example: For five-star graded user, free internet and free parking with 50 dollars accommodations rental fee; For three-star graded user, 60 dollars accommodations rental fee and another extra fee for convenient facilities.)
(2) Method of utilizing "resource trust information" from the viewpoint of Resource User:
   - Trust information (grade) of a resource is able to be checked through a trust-based resource sharing service of the present invention;
   - Only the desirable resource of a trust grade is selected by filtering a trust grade in a resource use reservation search window; and
   - Resource use is possible with better conditions in the future through observing the resource use rule (or contract) and enhancing the user trust.
(3) From the viewpoint of Resource Sharing Service Intermediary:
   - Provisions of differentiated resource use fees and options according to trust grade when in the service system operation;
   - Trust-based resource use service system is configured with a trust grade matching method between both sides (e.g., resource provider and user);
   - In order to increase a user trust grade, a user is encouraged to comply with contract during resource use; and
   - For a provider, a resource trust grade is recognized as the factor of increased revenue to raise efforts to manage users and resources

Trust information about resources is provided to users through a resource sharing service system, and user trust information is managed in a resource sharing service system without being exposed to him/herself or to a resource provider.

The configuration and operation according to various aspects of the present invention for implementing a trust-based resource sharing service described above will be described.

In one general aspect, provided is a method of performing a resource sharing transaction between a provider of a resource and a user of the resource, wherein the resource sharing transaction includes: setting a minimum user trust grade necessary for a use permission of the user when the provider provides a resource; and comparing a user trust grade set by the provider with a trust grade of a user to use the resource to control the use of the resource in response to the comparison result.

The resource use control procedure of the resource sharing transaction may include a procedure of limiting the use of the resource of the user when the comparison result indicates that the trust grade of the user to use the resource is lower than the trust grade for the resource permission set by the provider.

The resource may include an auxiliary facility, wherein the resource use control procedure of the resource sharing transaction may include a procedure of controlling an operation of the auxiliary facility according to the set user trust grade.

The resource sharing transaction may include a procedure of allowing the provider to check a status in which the user uses the resource.

The resource sharing transaction may further include: collecting resource use status information from the resource and analyzing data from the collected resource to determine whether contract violation, resource failure, or safety problem occurs; and a procedure of, when it is determined that contract violation, resource failure, or safety problem occurs while the user uses the resource, notifying this to the provider or the user.

The resource sharing transaction may further include a procedure of, when a user or a provider registers photograph or video after and before the use of the resource, comparing and analyzing the registered photograph or video to determine a difference.

In another general aspect, provided is a method of performing resource sharing transaction between a provider of a resource and a user of the resource, wherein the resource sharing transaction includes: generating and managing a trust grade of a user using the resource; generating and managing a trust grade of the resource; and controlling the use of the resource based on the user trust grade and the resource trust grade.

The resource may include an auxiliary facility, and the resource use control procedure of the resource sharing transaction may include a procedure of controlling an operation of the auxiliary facility of the resource according to the set user trust grade.

The resource sharing transaction may further include a procedure of allowing the provider to check a status in which the user uses the resource.

The resource sharing transaction may further include: a procedure of collecting resource use status information from the resource and analyzing data from the collected resource to determine whether contract violation, resource failure, or safety problem occurs; and a procedure of, when it is determined that contract violation, resource failure, or safety problem occurs while the user uses the resource, notifying this to the provider or the user.

The resource sharing transaction may further include a procedure of, when the user or the provider registers photograph or video before and after the use of the resource, comparing and analyzing the registered photograph or video to determine a difference.

In another general aspect, provided is a trust-based resource sharing system including a resource including a sensor and an auxiliary facility; a resource management system configured to perform resource sharing transaction between a provider of the resource and a user of the resource; and a resource use reservation system including a means configured to set a minimum user trust grade necessary for a use permission of the user when the provider provides a resource and a trust-based resource permission setup unit configured to compare the user trust grade set by the provider with a trust grade of a user to use the resource to control the use of the resource in response to the comparison result.

The resource management system may include a resource-provider-specific monitoring/management unit configured to perform a function of allowing the provider to check a status in which the user uses the resource after the processing of the resource sharing transaction.

The resource management system may further include a resource sharing operation management system configured to manage the resource management system to collect data from the auxiliary facility and the sensor of the resource for management of the resource when the user uses the resource and for control and management of the auxiliary facility and the sensor.

The resource use reservation system may further include: a user and resource trust information acquisition unit configured to acquire trust information including a trust grade of a user from the outside; and a resource use reservation management unit configured to obtain a list of resources corresponding to a corresponding condition through the user and resource trust information acquisition unit in response to a resource search of a user.

The resource management system may further include a resource management interaction interface configured to obtain data from the auxiliary facility and the sensor of the resource from the resource registered through the resource use reservation system and manage the resource to control a resource user permission of the user in linkage to the auxiliary facility and the sensor of the resource.

The resource management system may further include a resource use status analysis unit configured to collect use status data of the resource from the resource and analyze data from the auxiliary facility and the sensor of the collected resource to determine whether contract violation, resource failure, and safety problem occurs.

The resource sharing operation management system may include a resource sharing system monitoring unit configured to check whether the resource use reservation system and the resource management system operate normally.

The resource sharing operation management system may include: a user trust analysis management unit configured to generate and manage trust information about a user based on use status data accumulated while users use a resource and evaluation data provided from a provider; and a resource trust analysis management unit configured to manage resource trust information generated based on data from the auxiliary facility and the sensor of the resource.

The resource management system may further include a means configured to, when a user or a provider registers photograph or video after and before the use of the resource, compare and analysis the registered photograph or video to determine a difference.

Other features and aspects will be apparent from the following detailed description, the drawings, and the claims.

### BRIEF DESCRIPTION OF THE DRAWINGS

FIG. 1 is a schematic service scenario introduction diagram of a trust-based resource sharing service according to the present invention.
FIG. 2 is a configuration diagram of a trust-based accommodations/office sharing service system according to an embodiment of the present invention.
FIG. 3 is a procedure diagram of accommodations/office use reservation according to an embodiment of the present invention.
FIG. 4 is a procedure diagram of accommodations/office management according to an embodiment of the present invention.
FIG. 5 is a trust information processing procedure diagram in a trust-based accommodations/office sharing service system according to an embodiment of the present invention.
FIG. 6 is a configuration diagram of a trust-based automobile sharing service system according to another embodiment of the present invention.
FIG. 7 is a procedure diagram of trust-based automobile use reservation according to another embodiment of the present invention.
FIG. 8 is a procedure diagram of trust-based automobile management according to another embodiment of the present invention.
FIG. 9 is a trust information processing procedure diagram in a trust-based automobile sharing service system according to another embodiment of the present invention.

### DETAILED DESCRIPTION OF EMBODIMENTS

Hereinafter, a specific embodiment implementing the idea of the present invention will be described in detail with reference to the drawings. It is apparent that the embodiments described below are specific to accommodations/offices and automobiles among the "resources" to which the present invention is applied, and the scope of the present invention is not limited to accommodations/offices and automobiles. The scope of the present invention is defined by the scope of the claims included in this specification. For example, by reasonable interpretation of the claims, it is apparent that the sharing and renting of bicycles, factory equipment, warehouse equipment, hardware equipment, tools, instruments, furniture, and the like are also included in the scope of the present invention. Additionally, in the following description, the term "trust information" includes "trust grade."

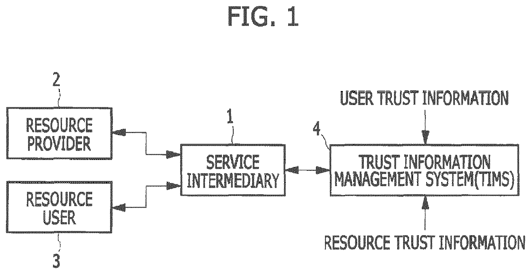

Before describing the technical configuration of an embodiment of the present invention for accommodations/offices and automobiles, a service scenario of a trust-based resource sharing service according to the present invention will be schematically described with reference to FIG. 1.

A resource sharing service intermediary or broker 1 exists for each field (i.e., accommodations, automobiles, bicycle, facilities, and the like) of a trust-based resource sharing service. This may be implemented in the form of web sites or mobile apps such as Airbnb, Uber, and so on.

The resource provider 2 communicates with the web site or mobile application of the service intermediary 1 (hereinafter referred to as a "service system") in order to register a shared resource target (accommodations, automobiles, and the like) to provide renting (or sharing), charges, and other required items, then exchanging information related to the resource sharing service transaction. Based on the past offer history and the reputation on its use or the trust information (including trust grade) at the time of resource registration, the resource provider 2 may undergo a verification process for the service target (or shared resource) and the charge. Here, the resource provider 2 includes all of the owner, manager, trustee, and lender of a resource.

The resource user 3 (hereinafter "user") exchanges information with the service system of the service intermediary 1; inputs a target resource, a location, a number of users, and the like; searches for an available resource; and exchanges various service transaction information. At this time, the user 3 may input the trust information of the resource to be used and perform search. Here, the resource user 3 also includes the tenant of the resource.

The Trust Information Management System (TIMS) 4 collects user trust information from social groups, affiliated companies, frequency of use of shared service, a reservation cancellation rate, and the like and, if necessary, from outside social agencies, and furthermore, collects, manages, and analyzes resource trust information through IoT sensors, devices, and other facilities installed in each resource. The user trust information and resource trust information collected by the TIMS 4 will be described later in the description of the concrete embodiment.

The TIMS 4 analyzes the trust information by the trust information analysis algorithm. The consideration of this trust information analysis algorithm is as follows.
- Filtering and priority decision on trust information
- Structuring of trust information using semantic ontology
- Setup of functional goal of analysis algorithm: Example) City driving suitability (so that the results of the trust analysis may be expressed in a form that is central to the use of universal automobiles)
- Type of analysis: System Trust, Personal Trust, Interpersonal Trust (Social Interaction)
- Trust analysis on the user entity and the resource provider entity itself, and trust analysis on the relationship between the user-resource provider entities
- Need to select trust analysis algorithm appropriate for each entity's type of trust information: Example 1) Rule-based, Machine-Learning-based algorithms in the case of users and resources themselves; Example 2) In the case of user relationship, Graph-based, Interaction-based algorithm; Example 3) Summing for heterogeneous trust analysis algorithm
- User customized Trust Level Agreement (TLA): The TLA may differ from each user depending on which factor a user focuses on in view of the history that the user selects the resource previously, resource status information, and the like.
- Information that a user wants to directly check, such as whether or not there is an accident, may be viewed without going through TLA conversion.
- TLA grade provided through the trust information analysis algorithm should be verified and supplemented based on user feedback

The service intermediary 1 may access the user trust information and the resource trust information through the TIMS 4.

On the other hand, the available shared resource and utilization charge reflecting the user trust information are transmitted to a user 3 from the service intermediary 1 and displayed differently for each user. After the user 3 selects one of the listed resources and makes a reservation, when visiting the accommodations or taking over the automobiles at the scheduled time, the user 3 may use the resource according to the contract details.

The resource provider 2 may feedback the user's use history (cleanup, indoor pollution, failure, and the like) to the service intermediary 1. At this time, the use history information may be automatically notified through IoT sensors, devices, and other facilities installed in the resource. In addition, the user 3 may also provide the service intermediary 1 with feedback on convenience, advantages, disadvantages, etc. when using the corresponding resource. The TIMS 4 updates the trust information based on the feedback from the user 3 and the resource provider 2, such as re-adjusting the trust grade of the corresponding user and the trust grade of the corresponding resource.

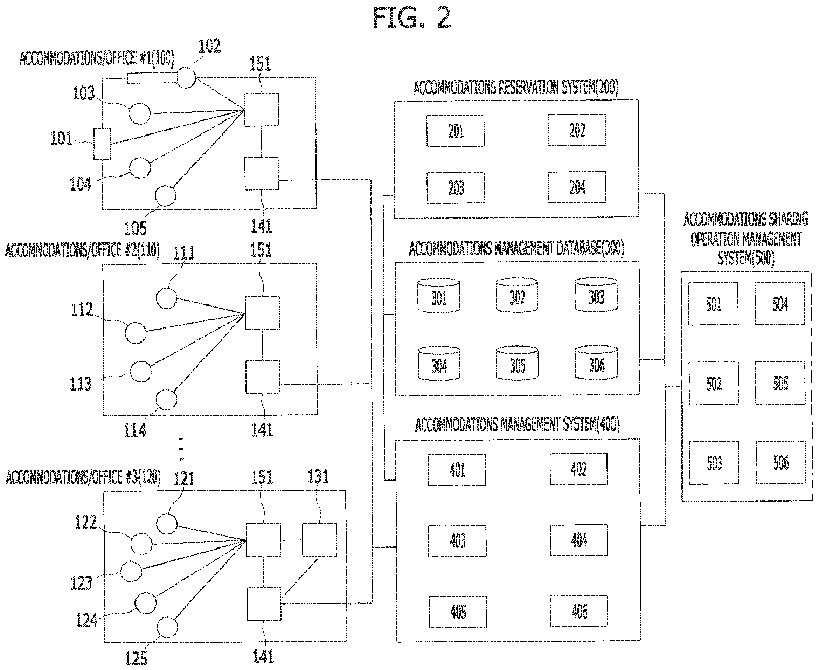

FIG. 2 is a structural diagram of an accommodations/office (collectively referred to as "accommodations") sharing service system depending on an embodiment of a trust-based resource sharing service according to the present invention. It should be understood that the system structure of FIG. 2 is a structure in which the service intermediary 1 and the TIMS 4 of FIG. 1 are organically combined and organized. This trust-based accommodations sharing service system connects trust-based accommodations renting services between an accommodations provider (including a manager) and a tenant, and it is largely includes a trust-based accommodations reservation system 200, a trust-based accommodations management database 300, a trust-based accommodations management system 400, and a trust-based accommodations sharing operation management system 500. (Hereinafter, for convenience, these systems will be referred to as an accommodations reservation system 200, an accommodations management database 300, an accommodations management system 400, and an accommodations sharing operation management system 500, respectively.)

When renting accommodations 100, 110, and 120 to the user, a manager or provider of accommodations registers information about the accommodations through the accommodations reservation system 200. Also, the user, after registering and logging in the accommodations reservation system 200, inputs and searches for accommodations information such as the location, rent period, and charge of desired accommodations, and selects desired accommodations from the retrieved accommodations information, and makes a reservation.

In registering accommodations through the accommodations reservation system 200, when the accommodations provider does not want to rent to a person with a low trust grade, a trust grade-based accommodations permission setup unit 202 may be used to set the minimum trust grade to the user. For example, when a user trust grade is given as five grades of 1 (minimum), 2, 3, 4, and 5 (maximum) and when an accommodations provider does not want to rent to a user with a low trust grade of 1 or 2, the minimum trust grade may be set to grade 3 through the accommodations permission setup unit 202.

Moreover, when the user logs in to the accommodations reservation system 200, a user/accommodations trust information acquisition unit 204 acquires the profile information, trust information, and past service use history information of the user through a user trust information management database 302 in the accommodations management database 300. Here, the user trust information stored in the user trust information management database 302 includes past accommodations use history information from the user's same/other service intermediary, personal credit information (job, asset details, income, overdue details, etc.) from financial companies, and information or criminal state from other organizations, such as workplaces or clubs.

When the user performs a search by inputting the conditions of accommodations, rent period, charge, and the like, the trust grade-based accommodations reservation management unit 201 obtains available accommodations list corresponding to the conditions of accommodations, rent period, charge, and the like from the accommodations trust information management database 303 in the accommodations management database 300, through the user/accommodations trust information acquisition unit 204. Then, the provider performs comparison on whether to satisfy the minimum trust level of the user set through the trust grade-based accommodations permission setup unit 202, and excludes, or limits, the current user trust grade less than the grade allowed by the accommodations provider from the available accommodations list and outputs it. Here, the accommodations trust information stored in the accommodations trust information management database 303 includes data from IoT sensors installed in the accommodations (explained later), maintenance/repair history, other reputation from an accommodations provider, the number of rent, or, a past accommodations offering history of an accommodations provider (e.g., the number of offering, offering duration, complain history, contract cancellation rate, or reputation level (e.g., facility quality, recommendation level, etc.)).

A trust grade-based accommodations display 203 provided with the outputted available list displays it through a user PC or mobile terminal screen. When the user views the trust grade-based accommodations display 203 and selects desired accommodations to perform reservation, the reservation information (e.g., the selected accommodations, date/duration, charge, option, and the like) is stored in the reservation information management database 301 in the accommodations management database 300.

Moreover, by interacting with Internet of Things (IoT) and smart home functions of accommodations where a user stays from the moment the user checks in to a check-out based on a contract through the accommodations reservation system 200, the accommodations management system 400 monitors the violation of accommodations contracts such as smoking or noise while managing the accommodations on behalf of the accommodations manager (or provider), and furthermore, under the contract, manages the granting of permission to a user to use the appliances and auxiliary facility such as air conditioners, washing machines, TV/pay channel, telephone, internet, and the like, and provides a monitoring function for the current use of accommodations to the provider and the user. This allows the provider to check whether the user uses the accommodations without any problem in compliance with the contract after renting the accommodations. The monitoring function here checks for violations of contracts such as smoking, noise, door locks, and excess electricity usage and only includes related safety, such as fire, gas leakage, and the like, in order not to infringe the user's privacy.

The accommodations management system 400 includes an accommodations management interaction interface 401 for obtaining sensor data from the IoT/smart home-based accommodations 100, 110, and 120 registered through the accommodations reservation system 200 to check the contract violation of a user and for interacting with IoT and smart home facilities, for the purpose of controlling the permission of the user of air conditioners, washing machines, TV/pay channel, internet, and the like.

An accommodations data collection unit 402 of the accommodations management system 400 performs functions of collecting actual sensor data, auxiliary facilities use status data, and the like from the accommodations through the accommodations management interaction interface 401, and storing and managing the collected data in an accommodations sensor data storage/management database 305 of the accommodations management database 300. On the other hand, the accommodations management database 300 includes an accommodations sensor/auxiliary facility control management database 304 to store and manage information about the presence of sensors (e.g., a smoke sensor, a noise sensor, a flame sensor, a door close/open detection sensor, a temperature sensor, a humidity sensor, a gas sensor, a vibration sensor, and the like) in accommodations registered through the accommodations reservation system 200 and a home appliance (e.g., an air conditioner, a washing machine, an electronic door lock, TV/IPTV/cable TV, WIFI, wired Internet, and the like), information about the presence of auxiliary facilities (e.g., parking lot, toilet, spa, sauna, and the like), and operation and use status information of corresponding sensor/auxiliary facility.

An accommodations status analysis unit 403 analyzes sensor data and auxiliary facility information collected from the accommodations data collection unit 402 to determine whether contract violations and safety problems occur. As such, a function to determine contract violation and safety issues is dependent on the type and performance of sensors and auxiliary facilities installed in the accommodations. Therefore, different types of accommodations status analysis results may be provided (outputted) according to sensors and auxiliary facilities.

After an accommodations provider (or manager) rents accommodations, the accommodations-provider-specific monitoring/management unit 404 performs functions of remotely checking whether the user violates the contract matters (smoking, door lock, party prohibition, energy saving, and the like) and whether there are problems in safety issues (e.g., fire, gas leakage, and the like) and auxiliary facilities, through PC or mobile terminal (smart phone, tablet, and the like).

A provider/user information notification unit 405 notifies the accommodations provider or the user of the occurrence of a contract violation, a facility failure, or a safety problem, through a telephone (including smartphone), PC, and the like while the user is staying in the accommodations.

A user-specific accommodations history monitoring/management unit 406 has a function of checking, in the accommodations or remotely, a contract violation measurement result, energy usage such as electricity, whether a door is locked, facility use status, and other violations, through sensor detection during the period that an accommodations user rents and uses it.

On the other hand, IoT-based smart accommodations #1, #2, and #3 100, 110, and 120 on the left side of FIG. 2 represent examples of various types of accommodations registered through the accommodations reservation system 200. Thus, different types of sensors, auxiliary facilities, and the like may be provided in each of the accommodations 100, 110, and 120, and, depending on the types and characteristics of the sensors and auxiliary facilities, functions such as other types of convenience services, safety diagnosis, and contract violation checking may be provided.

The type of IoT-based smart accommodations #1 100 is an example of accommodations including an electronic door lock 101, a hinged sensor 102, a noise sensor 103, a smoke sensor 104, and a flame sensor 105. These sensors are connected, in wired or wireless, to an IoT gateway/platform 151 in the accommodations #1 100, and data generated from the sensor is transmitted to the IoT gateway/platform 151 and then, collected and processed. An accommodations sharing client 141 in the accommodations #1 100 connects the accommodations reservation system 200, the accommodations management database 300 and the accommodations management system 400 to the accommodations #1 100, thereby allowing the accommodations management system 400 to collect data through the sensors, the auxiliary facilities, and the IoT gateway/platform 151 in the accommodations during the user's renting period, and to control and manage the sensors and auxiliary facilities.

Another type of the IoT-based smart accommodations #2 110 is generally similar to the type of the accommodations #1 100, but the type of a sensors used therein are different. The functions of the IoT gateway/platform 151 and the accommodations sharing client 141 are also the same. The type of the IoT-based smart accommodations #3 120 is focused on auxiliary facilities installed therein, unlike the accommodations #1 100 and #2 110. In addition to the IoT gateway/platform 151 and the accommodations sharing client 141, a smart home controller 131 is additionally included in accommodations #3 120.

In the following, how accommodations management is possible through the accommodations management system 400 according to each type of the IoT-based smart accommodations 100, 110, and 120 will be described in detail.

### o IoT-based smart accommodations #1 100

- Electronic door lock 101: By using a camera attached to a door lock, Near Field Communication (NFC), and a Bluetooth/Beacon transmission function, whether a user checks in or out, confirmation of how many users check in, and check for accompanying pet animals may be processed through the accommodations status analysis unit 403 of the accommodations management system 400. Through this, it is confirmed whether the accommodations contract condition such as the limit of the accommodations number and no pets allowed.
- Hinged sensor 102: Transmits data about whether windows of the accommodations are open. The data is analyzed in the accommodations status analysis unit 403 of the accommodations management system 400. That is, when the exit of the user is detected through the electronic door lock 101 but it is determined that the accommodations use is not yet finished (i.e., the user is out) through the confirmation of user's accommodations contract information and use status stored in the reservation information management database 301 of the accommodations management database 300, if it is detected that the window is opened through the hinged sensor 102, it is determined that the user does not properly lock the door and door lock contract violation is notified.
- Noise sensor 103: The accommodations status analysis unit 403 checks whether a party/event noise occurs during the stay of the user by using the noise sensor 103, and, if there is a party/event prohibition contract provision, the contract violation information may be transmitted to the accommodations-provider-specific monitoring/management unit 404, the user-specific accommodations history monitoring/management unit 406, and the provider/user information notification unit 405 to notify the user, and may be recorded in the accommodations sensor data storage/management database 305 to be managed.
- Smoke sensor 104, flame sensor 105: The accommodations status analysis unit 403 checks whether smoking occurs during the stay of the user, and, if there is a smoking prohibition contract provision, the contract violation information may be transmitted to the accommodations-provider-specific monitoring/management unit 404, the user-specific accommodations history monitoring/management unit 406, and the provider/user information notification unit 405 to notify the user, and may be recorded in the accommodations sensor data storage/management database 305 to be managed. When the fire occurrence is detected in the accommodations status analysis unit 403 according to the size of the smoke and the flame detected by the smoke sensor 104 and the flame sensor 105, it is similarly notified to the provider and the user.
- Accommodations sharing client 141: Delivers data from sensors and auxiliary facilities in accommodations to the accommodations management system 400, and performs intermediary function to control a user to use auxiliary facilities according to the conditions contracted in the accommodations reservation system 200. The accommodations sharing client 141 may be downloaded and installed in the IoT gateway/platform 151 or the smart home controller 131 in the form of application software or may be installed as separate hardware.

### o IoT-based smart accommodations #2 110

- Gas sensor 111: When gas leakage is detected through the accommodations status analysis unit 403, the gas leakage fact is transmitted to the accommodations-provider-specific monitoring/management unit 404, the user-specific accommodations history monitoring/management unit 406, and the provider/user information notification unit 405 to notify the provider and the user and is recorded in the accommodations sensor data storage/management database 305 to be managed.
- Temperature sensor 112, humidity sensor 113: These sensors monitor, through the accommodations status analysis unit 403, whether the air conditioner is operating properly during the stay of the user. If a preset range (e.g., 20 to 35 °C) is exceeded, this is notified to the provider through the provider/user information notification unit 405.
- Vibration sensor 114: The vibration sensor 114 detects vibration due to collapse, fall, breakage or the like, and if the accommodations status analysis unit 403 determines that the vibration exceeds the preset range, this is notified to the provider by using the provider/user information notification unit 405.

### o IoT-based smart accommodations #3 120

- Energy measurement equipment such as IoT plug 121, smart meter, and the like: Electricity, gas, and water usage data used while the user is staying is collected and examined through the accommodations status analysis unit 403. If the contracted range (for example, 10kW/hr of electric power for 3-day-2-night of accommodations, 600 liters of water, 30 liters of gas, and the like) is exceeded, the contract violation information is delivered to the accommodations-provider-specific monitoring/management unit 404, the user-specific accommodations history monitoring/management unit 406, and the provider/user information notification unit 405 to notify the provider and the user, and is recorded in the accommodations sensor data storage/management database 305 to be managed.
- Air conditioner 122, pay channel 123 such as TV/IPTV/cable, network router/gateway 125, parking door close/open control device 124, and the like: If these are determined as provided options during the accommodations use period when a user makes a contract through the accommodations reservation system 200, these items, including WIFI, internet, parking lot, etc. are allowed or prevented to use or from using by the accommodations-provider-specific monitoring/management unit 404 interacting with the accommodations sharing client 141 of the corresponding accommodations through the accommodations management interaction interface 401, based on the use permission information on the auxiliary facilities in the accommodations for the corresponding user recorded in the reservation information management database 301. Or, the accommodations-provider-specific monitoring/management unit 404 may use the IoT gateway/platform 151 or the smart home controller 131 of the accommodations, or may directly control the corresponding auxiliary facilities.

The permission/prevention of such auxiliary facilities is valid only during the period of the user's stay. When the use contract expires due to check-out, the management of the use right to the auxiliary facilities is initialized. In addition, when the use contract expires due to the check-out of the user or the like, accommodations management through the accommodations management system 400 is terminated, and data on sensors, auxiliary facilities, and the like is prevented from being transmitted to the accommodations management system 400 from the accommodations.

Referring again to FIG. 2, the accommodations sharing operation management system 500 shown at the most right will be described. The components are as follows.
- Accommodations sharing system monitoring unit 501 for checking whether accommodations reservation and management function elements are operating normally,
- Accommodations sharing system operation management unit 502 for allowing a provider of the accommodations management system to control and manage accommodations reservation system, database, and management system 200, 300, and 400, which connect users with accommodations providers through accommodations management,
- User trust analysis management unit 504 for generating and managing trust information for corresponding user, using sensor data and contract violation data accumulated during stay of users, and also subjective evaluation provided by an accommodations provider,
- Accommodations trust analysis management unit 505 for managing trust information for accommodations, which is measured based on sensors of accommodations, auxiliary facility operation status and cleanness, convenience, or the like,
- Trust information sharing unit 506 for providing and delivering trust information accumulated through the accommodations sharing service to another service and the third party,
- Accommodations sharing policy management unit 503 for setting up policies such as accommodations/rent charge discounts or provided options according to user trust grade and accommodations trust grade. Additionally, in the contract violation situations such as smoking detection, noise generation, vibration occurrence, gas leakage, temperature abnormality, incomplete door lock, pet animal accompany, etc. collected through sensor data in the accommodations status analysis unit 403, this accommodations sharing policy management unit 503 has a function for setting up an accommodations management policy such as whether to immediately notify the provider and the user or whether to notify the provider and the user when the accumulated number of such violation is exceeded a threshold.

Such functions related to accommodations reservation/management may be placed in one physical system or may be distributed in various physical systems according to the implementation method, and the arrangement method thereof may be changed.

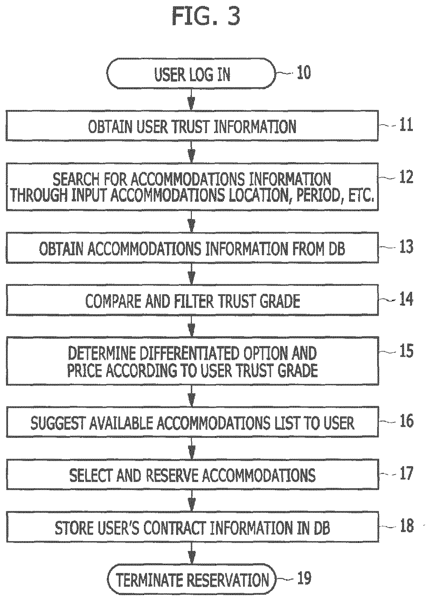

FIG. 3 shows an accommodations reservation procedure using the accommodations reservation system 200 of FIG. 2.
- User logs in through accommodations reservation system 200 (10).
- Corresponding user's profile, trust information, past use history information, and the like are loaded from the user trust information management database 302 of the accommodations management database 300 (11).
- User searches accommodations by inputting accommodations location, period, charge, and the like through an accommodations web service system or a smartphone application program (12).
- At this time, accommodations data meeting the search condition is obtained from the accommodations trust information management database 303 (13).
- Comparison between the trust grade of the users who are searching and the trust grade set by a provider is performed (14). Here, accommodations information includes a user trust grade that the corresponding provider permits. If the current user's grade is lower than the permission grade, the accommodations is excluded, or limited, (filtered) from the search results and displayed.
- Depending on the user trust grade, differentiated service options are determined for the use of the air conditioner, telephone, WIFI, parking lot, and other auxiliary facilities of the accommodations (15). In such a way, such differentiated options for accommodations according to the user trust grade may be inputted when a manager (or provider) registers accommodations through the accommodations reservation system 200 or may be entrusted to an accommodations management service, so that they are selectively applied.
- In accordance with the user trust grade, a list of available accommodations, use charge for each accommodations, provided options, etc. are displayed through a web page or application of a user's PC or mobile terminal (including smartphones) (16).
- A user selects and determines desired accommodations among the listed ones through a trust-based search, or the user may make a accommodations use contract via online by payment (17).
- Reservation and contract details of the user are recorded and stored in the reservation information management database 301 of the accommodations management database 300 (18).
- The reservation procedure terminates according to the user's logout (19).

In the above accommodations reservation procedure, the processing order of searching accommodations and filtering based on a user trust grade may be changed according to the type of implemented database and the configuration method.

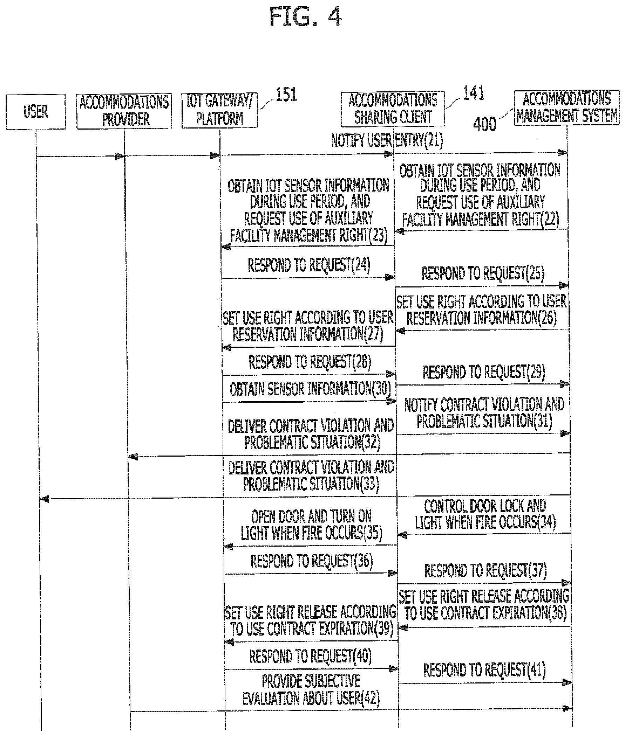

FIG. 4 illustrates a procedure of controlling and managing the IoT-based smart accommodations 100, 110 and 120 through the accommodations management system 400, which shows the transaction flow between a user, an accommodations provider, the IoT gateway/platform 151 or the smart home controller 131 in accommodations, the accommodations sharing client 141, and the accommodations management system 400.

After completing an accommodations use contract according to the procedure shown in FIG. 3, the user checks in the accommodations on the contracted date. The user check-in may be processed through a method in which a user or a provider provides an input by manually changing a setup into a check-in through the accommodations-provider-specific monitoring/management unit 404 of the accommodations management system 400 or the user-specific accommodations history monitoring/management unit 406, or an automatic method such as user's face recognition through camera shooting of the electronic door lock 101, NFC or Bluetooth beacon message reception and acceptance, QR code and bar-code recognition, etc. In the case where the user's check-in is automatically detected through the electronic door lock 101, this room entry data is notified to the accommodations management system 400 through the IoT gateway/platform 151 and the accommodations sharing client 141 (21).

When the user check-in is confirmed, the accommodations management system 400 acquires, using the accommodations sharing client 141 and the IoT gateway/platform 151, sensor data for contract violation and safety management from the corresponding accommodations during the accommodations use contract period of the user, and delivers a request for use of management authority (or right) to manage auxiliary facilities to the IoT gateway/platform 151 through the accommodations sharing client 141 (23).

Upon receiving a response to the request through the accommodations sharing client 141 from the IoT gateway/platform 151 (25), the accommodations management system 400 is allowed to acquire data from the accommodations and to remotely manage the auxiliary facilities, during the user's use period. The accommodations management system 400 transmits a use right setup message of the accommodations, according to the user reservation information (26, 27). At this time, in order to obtain user reservation information, the accommodations management system 400 retrieves the stay period, checkout time, permitted auxiliary facility information (e.g., air conditioner, WIFI, and the like), and contract condition information (e.g., no smoking, no noise, door lock, and the like) of the user from the reservation information management database 301. Based on such contract information, the accommodations management system 400 acquires the sensor data for contract violation and safety management during the accommodations use contract period of the user and transmits a use right setup message for auxiliary facilities, through the accommodations sharing client 141 and the IoT gateway/platform 151.

If the setup for sensor/auxiliary facility use in the accommodations is performed successfully, the results are notified to the accommodations management system 400 (28, 29). Thereafter, the user may be permitted to use or prevented from using the air conditioner, TV pay channel, WIFI, parking lot, and the like, according to the use contract.

The sensor data (or sensor information) from the sensors of the accommodations is transmitted from the IoT gateway/platform 151 to the accommodations sharing client 141 (30). The accommodations sharing client 141 does not deliver all sensor data to the accommodations management system 400, but performs filtering or preprocessing based on accommodations use contract information, thereby notifying the accommodations management system 400 of only information and problematic situations corresponding to the contract violation details, such as smoking or noise generation (31).

If notified of the contract violation information or the security incident situations, the accommodations management system 400 delivers this to the accommodations provider and the user through a mobile terminal and PC (32, 33). For example, in the situation that a fire occurs, the accommodations management system 400 transmits a control signal for unlocking doors, opening windows, and turning on lights in the accommodations, to the accommodations sharing client 141 (34). And, the accommodations sharing client 141 instructs the IoT gateway/platform 151 to release the door locks, to open the windows, and to turn on the lights (35). A response signal for such a control request may be transmitted from the IoT gateway/platform 151 to the accommodations sharing client 141 (36), or may be transmitted from the accommodations sharing client 141 to the accommodations management system 400 (37).

When the use contract expires or the user checks out, the accommodations management system 400 transmits a use right release setup message to the accommodations sharing client 141 and the IoT gateway/platform 151, to cancel or release the accommodations use permission setup given to the corresponding user (38). This message is transmitted to the IoT gateway/platform 151 of the accommodations through the accommodations sharing client 141 (39).

In response to the use right release setup message, both the user's entrance and the auxiliary facility use right are all prevented. At this time, a response signal to the use right release setup message may be transmitted to the accommodations sharing client 141 and the accommodations management system 400 (40, 41).

The accommodations provider may input, through the accommodations-provider-specific monitoring/management unit 404 of the accommodations management system 400, subjective evaluation information about whether the user properly uses the auxiliary facilities according to the contract during the rental period (42).

As a possible additional configuration, the user may register, through the user-specific accommodations history monitoring/management unit 406 of the accommodations management system 400, photographs or video taken from the facilities, inside, or outside of the accommodations, when he/she enters and leaves the room. The user-specific accommodations history monitoring/management unit 406 analyzes and stores differences between the photograph or video registered when the user enters and leaves the room by utilizing image processing functions such as image object recognition and comparison, and utilizes this as proof of dispute arbitration in the case of loss or damage in the accommodations. Likewise, the accommodations provider may also register, through the accommodations-provider-specific monitoring/management unit 404, photographs or video of the accommodations' facilities, inside, or outside before and after the user enters and leaves the room (accommodations). By doing so, the provider easily identifies problems such as loss or damage through automated image analysis, and may use them as evidence when a dispute arises.

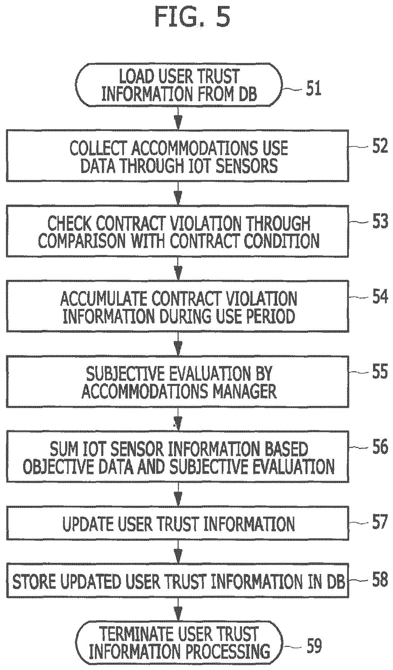

FIG. 5 shows a procedure of calculating and updating a trust grade of a user based on a contract violation while the user is staying in accommodations.
- Existing trust information for the present user is loaded from the user trust information management database 302 of the accommodations management database 300. (51)
- During the accommodations stay period, data on smoking, noise, door lock, and energy usage collected from sensors and the like are collected and transmitted to the accommodations management system 400. (52)
- The contract violation and safety management violation details in comparison to the contract contents are analyzed in the accommodations management system 400 (53), and are accumulated in the accommodations management system 400. (54)
- After the user check-out, the accommodations provider provides a subjective evaluation score for cleanness and the like of user's accommodations use. (55)
- The accommodations management system 400 sums up objective evaluation information about contract and safety violations identified through IoT sensors and auxiliary facilities and subjective evaluation score fed back from the provider, calculating the evaluation score for the accommodations use. (56)
- The trust information and the updated trust information calculated in the accommodations use are recorded and managed in the user trust information management database 302. (58) The user trust information in the user trust information management database 302 may be used when the corresponding user makes an accommodations use reservation in the future, thereby providing differentiated trust-based accommodations. Further, the user trust information in the user trust information management database 302 is provided to the third party or other services through the user's agreement, so that user's trust-based linked service utilization is possible.

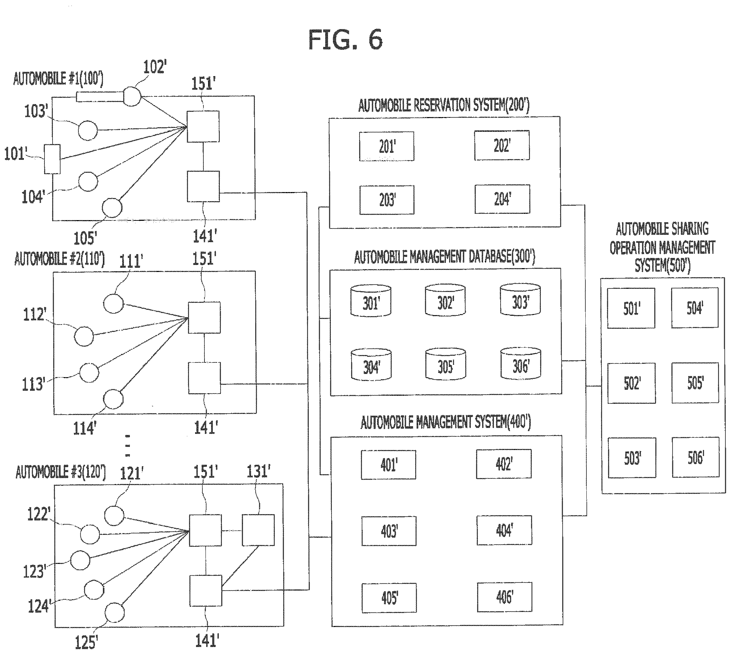

As another embodiment of the trust-based resource sharing service of the present invention, FIG. 6 is a structural diagram of an automobile sharing service system. Since it has a configuration similar to the case of the accommodations/office described with reference to FIGS. 2 to 5, differences between them will be described.

This trust-based automobile sharing service system includes an automobiles reservation system 200', an automobile management database 300', an automobile management system 400', and an automobile sharing operation management system 500'.

An automobile provider (or manager), who wants to rent automobiles 100', 110', and 120' to users, registers information about automobiles that the automobile provider manages or owns, through the automobiles reservation system 200'. Also, a user, after registering him/herself and logging in the automobiles reservation system 200', inputs and searches for automobile information such as automobile model, use period, charge, etc., and performs a reservation by selecting a desired automobile from the retrieved automobile information.

In registering automobiles through the automobiles reservation system 200', if the automobile provider does not want to allow a person with a low trust grade to be rent, a trust grade-based automobile permission setup unit 202' may be used to set the minimum trust grade to the user. For example, when a user trust grade is given as five grades of 1 (minimum), 2, 3, 4, and 5 (maximum), if an accommodations provider does not want to rent to a user with a low trust grade of 1 or 2, the minimum trust grade may be set to grade 3 through the trust grade-based automobile permission setup unit 202'.

Moreover, when the user logs in to the automobile reservation system 200', a user/automobile trust information acquisition unit 204' acquires the profile information, trust information, past service use history information of the user, using a user trust information management database 302'. Here, the user trust information stored in the user trust information management database 302' includes past automobile use history information from user's same/other service intermediary (e.g., number of times of use, period, use distance, over-speeding, traffic regulation violation, cleaning status, vehicle damage, accident history, complain history, reservation cancellation rate, etc.), insurance information (such as accident history, driving history, gender, inclinations, etc.) from insurance companies, personal credit information (e.g., occupation, asset details, income, overdue details, etc.) from financial institutions, other information from e.g. organizations such as other workplaces or clubs, car crime, or the like.

When the user performs a search by inputting the conditions of the automobile model, use period, charge, and the like, the automobile reservation management unit 201' obtains an available automobile list corresponding to the conditions of the automobile model, use period, charge, and the like from the automobile trust information management database 303', by using the user/automobile trust information acquisition unit 204'. Then, the provider performs comparison on whether to satisfy the minimum trust level of the user setup by using the trust grade-based automobile permission setup unit 202', and excludes, or limits, the current user trust grade less than the grade allowed by the automobile provider from the available automobile list, and outputs it. Here, the automobile trust information stored in the automobiles trust information management database 303' includes various data from IoT sensors equipped in the automobile (e.g., traveling distance, engine load, consumed time after start-up, cooling water temperature, engine oil temperature, fuel level, transmission oil temperature, engine RPM, engine torque, automobile speed, turbocharger RPM, intake air temperature, NOₓ emissions, accelerator pedal position, battery voltage, CO₂ emissions, and the like), accident history information from insurance companies, and history of maintenance, history of other makers, reputation, rented automobile recovery, or automobile provider's past automobile offerings from automobiles providers (e.g., number of offerings, duration of offering, history of complaints, contract cancellation rate, and reputation (e.g., vehicle quality status, recommendation, etc.)).

The automobile display 203' given the outputted available automobile list displays it through a user PC or mobile terminal screen. If the user views the automobile display 203' and selects a desired automobile to perform reservation, the automobile information (e.g., the selected automobile, date/duration, charge, option, and the like) is stored in the reservation information management database 301' in the accommodations management database 300'.

On the other hand, the automobiles management system 400', by interacting with the various IoT functions installed in the automobile, manages the automobile on behalf of the automobile manager (provider) and monitors the violation of automobile use contracts such as over-speeding, traffic regulation violation, automobile damage, traffic accident, abnormal driving, drunken driving, smoking, and the like, from the moment that a user takes over an automobile during an use period based on the user contract through the automobile reservation system 200'. Furthermore, the automobiles management system 400' manages the grant of permission to use auxiliary facilities (e.g., air conditioner, refrigerator or other electric appliances, black box, navigation, and other optional or auxiliary devices) installed in the automobile and provides a monitoring function for the current use status to the provider and the user, according to the contract. This allows the provider to check whether the user uses the automobile without any problem in compliance with the contract after renting the automobile. In order not to infringe user's privacy, it is desirable that the above monitoring functions only include the check of safety-related portion as well as contract item violation.

The automobile management system 400' obtains sensor data from the IoT/smart based automobiles 100', 110', and 120' registered through the automobile reservation system 200' to check the contract violation of a user, and for the purpose of controlling the use permission of the user for auxiliary facilities (devices), includes an automobile management interaction interface 401' for interacting with the IoT of the automobile.

An automobile data collection unit 402' of the automobile management system 402' performs functions of collecting actual sensor data, additional facility use status data, and the like from the automobile through the automobile management interaction interface 401', and storing and managing the collected data in an automobile sensor data storage/management database 305' of the automobile management database 300'. On the other hand, the automobile management database 300' includes an automobile sensor/auxiliary facility control management database 304' to store and manage information about the presence of sensors (e.g., engine related sensors such as engine load, coolant, oil, RPM, torque, and the like, operation related sensors such as driving distance, time, and the like, safety/security related sensors such as indoor temperature, humidity, pollution, noise, smoke, flame, door lock, and the like) in the automobile registered through the automobile reservation system 200' and information about the presence of an auxiliary facility (e.g., air conditioner, refrigerator and other electric appliances, TV, and the like, communication equipment such as WIFI, wired internet, and the like, and driving auxiliary equipment such as black box, navigation, and the like) and operation and use status information of corresponding sensors/auxiliary facilities.

An automobile status analysis unit 403' analyzes the sensor data and auxiliary facility information of the automobile collected from the automobile data collection unit 402' to determine whether a contract violation and a safety problem occur. In such a way, a function to identify contract violation and safety issues is dependent on the type and performance of sensors and auxiliary facilities installed in the automobile. Therefore, different types of automobile status analysis results may be outputted according to sensors and auxiliary facilities.

After an automobile provider (or manager) rents an automobile, an automobile-provider-specific monitoring/management unit 404' performs functions of remotely checking whether the user violates the contract matters (smoking, normal operation, door lock management, drinking, energy saving, and the like) and whether there is no problem in safety issues (e.g., fire, gas leakage, and the like) and auxiliary facility, through PC or mobile terminal (smart phone, tablet, and the like).

A provider/user information notification unit 405' notifies the automobile provider or the user of the occurrence of a contract violation, a facility failure, or a safety problem, through a telephone (including smartphone), PC, and the like while the user is using the automobile.

And, a user-specific automobile use history monitoring/management unit 406' has a function of checking, inside the car or remotely, a contract violation measurement result, energy usage, facility use status, and other violations in the automobile, through sensor detection during the period that an automobile user rents and uses it.

On the other hand, IoT-based smart automobiles #1, #2, and #3 100', 110', and 120' on the left side of FIG. 6 represent examples of various types of automobiles registered through the automobile reservation system 200'. Thus, different types of sensors, auxiliary facilities, and the like may be provided in each of the automobiles 100', 110', and 120'. Depending on the types and characteristics of the sensors and auxiliary facilities, functions such as other types of convenience services, safety diagnosis, and contract violation confirmation may be provided.

The loT-based smart automobile type #1 100' is an example of automobiles including an anti-theft door lock 101', a car window sensor 102', a noise sensor 103', a smoke sensor 104', and a flame sensor 105'. These sensors are connected, in wired or wireless, to an IoT gateway/platform 151' in the automobile #1 100', and data generated from the sensor is transmitted to the IoT gateway/platform 151' and then, collected and processed. The automobile sharing client 141' in the automobile #1 100' is connected to the automobile reservation system 200', the automobile management database 300', and the automobile management system 400', thereby allowing the automobile management system 400' to collect data through sensors, auxiliary facilities, and the IoT gateway/platform 151' in the automobile during the user's renting period, and control and manage the sensors and auxiliary facilities.

Another type of IoT-based smart automobile #2 110' is generally similar to the type of the automobile #1 100', but the type of sensors used therein is different. The functions of the IoT gateway/platform 151' and the automobile sharing client 141' are also the same. IoT-based smart automobile #3 120' is the type focusing on auxiliary facilities equipped therein, unlike the automobiles #1 and #2 100' and 110', and in addition to the IoT gateway/platform 151' and the automobile sharing client 141', an auxiliary facility controller 131' is additionally included.

In the following, how automobile management is possible through the automobile management system 400' according to each type of the IoT-based smart automobiles 100', 110', and 120' will be described in detail.

### o IoT-based smart automobile #1 100'

- Anti-theft door lock 101': As a door lock to which mechanical and electronic devices are applied to prevent theft of an automobile, boarding before driving, getting off after driving, checking whether someone gets in through a door, and door lock status through sensors may be processed through the automobile status analysis unit 403' of the automobiles management system 400'. Through this, automobiles may confirm whether there is a violation of the contract conditions related to the parking/ door lock.
- Car window sensor 102': Transmits data about whether the windows of the automobile are open. The transmitted data is analyzed in the automobile status analysis unit 403' of the automobile management system 403'. That is, although the user's getting-off and parked state is detected through the anti-theft door lock 101', if it is detected that the window is open through the window sensor 102' so that the car window is not closed based on the automobile use contract information of the user stored in the reservation information management database 301' of the automobile management database 300', the user may be notified of the violation of contract by judging that the automobile is not properly managed.
- Drinking measurement sensor 103': The automobile status analysis unit 403' checks whether driving while drinking or intoxicated (or drinking when in non-driving) using this drinking measurement sensor 103'. If there is drinking prohibition contract provision, the contract violation information may be transmitted to the automobile-provider-specific monitoring/management unit 404', the user-specific automobile use history monitoring/management unit 406', and the provider/user information notification unit 405' to notify the user, and may be recorded in the automobile sensor data storage/management database 305' to be managed.
- Smoke sensor 104', flame sensor 105': Checks whether smoking occurs during the stay of the user by using the automobile status analysis unit 403'. If there is a smoking prohibition contract provision, the contract violation information may be transmitted to the automobile-provider-specific monitoring/management unit 404', the user-specific automobile use history monitoring/management unit 406', and the provider/user information notification unit 405' to notify the user, and may be recorded in the automobile sensor data storage/management database 305' to be managed. When the fire occurrence is detected in the automobile status analysis unit 403' according to the dimension of the smoke and the flame detected by the smoke sensor 104' and the flame sensor 105', it is similarly notified to the provider and the user.
- Automobile sharing client 141': Data from sensors and auxiliary facilities of the automobile is delivered to the automobile management system 400', and an intermediary function is performed to control a user to use auxiliary facilities, according to the conditions contracted through the automobile reservation system 200'. The automobile sharing client 141' may be downloaded and installed in the IoT gateway/platform 151' or the auxiliary facility controller 131' in the form of application software or may be installed as separate hardware.

### o IoT-based smart automobile #2 110'

- Gas sensor 111': When emission gas leakage is detected through the automobile status analysis unit 403', the emission gas leakage fact is transmitted to the automobile-provider-specific monitoring/management unit 404', the user-specific automobile use history monitoring/management unit 406', and the provider/user information notification unit 405' to notify the provider and the user and is recorded in the automobile sensor data storage/management database 305' to be managed.
- Temperature sensor 112', humidity sensor 113': Whether the air conditioner is operating properly in an automobile while a user uses the automobile is monitored using these sensors through the automobile status analysis unit 403', and if a preset range is exceeded, this is notified to the provider through the provider/user information notification unit 405'.
- Vibration sensor 114': The vibration sensor 114' detects vibration due to an abnormal operation of an engine. If the automobile status analysis unit 405' determines that the vibration exceeds the preset range, this is notified to the provider using the provider/user information notification unit 405'.

### o IoT-based smart automobile #3 120'

- Energy measurement equipment 121' such as a smart meter and the like: Energy usage data is collected while a user uses an automobile and is examined through the automobile status analysis unit 405'. In the case of exceeding the scope of the contract, the contract violation fact is transmitted to the automobile-provider-specific monitoring/management unit 404', the user-specific automobile use history monitoring/management unit 406', and the provider/user information notification unit 405' to notify the provider and the user and is recorded in the automobile sensor data storage/management database 305' to be managed.
- Car refrigerator 122', TV 123', network router/gateway 125', parking door close/open control device 124' and the like: If those are determined as provided options during the automobile use period when the user makes an use contract through the automobile reservation system 200', the automobile-provider-specific monitoring/management unit 404' -- by using the permission information such as an auxiliary facility in the automobile for the corresponding user recorded in the reservation information management database 300' of the automobile management database 301' -- interacts with the automobile sharing client 141' of the corresponding automobile through the automobile management interaction interface 401', or utilizes the IoT gateway/platform 151' or the smart car controller 131' of the automobile, or directly controls the corresponding auxiliary facilities, so that it can allow or prevent the user to use or from using an air conditioner, pay channels, WIFI, internet, parking lot, and the like. The permission/prevention of these auxiliary facilities is valid only during the use period of the corresponding user. When the use contract expires due to returning the automobile, the management of the use right to the auxiliary facilities is initialized. In addition, when the use contract expires due to returning an automobile, automobile management through the automobile management system 400' is terminated, and data on sensors, auxiliary facilities and the like is prevented from being transmitted to the automobile management system 400' from the automobile.

Referring again to FIG. 6, the automobile sharing operation management system 500' shown at the most right will be described. The components are as follows.
- Automobile sharing system monitoring unit 501' for checking whether automobile reservation and management function elements are operating normally,
- Automobile sharing system operation management unit 502' for allowing provider of automobile management system to control and manage automobile reservation system, database, and management system 200', 300', and 400', which connect users with automobile providers through automobile management,
- User trust analysis management unit 504' for generating and managing trust information for corresponding user, based on sensor data and contract violation data accumulated during user's operation and subjective evaluation provided by an automobile provider,
- Automobile trust analysis management unit 505' for managing trust information for automobile measured based on a sensor of an automobile, auxiliary facility operation situation and cleanness, and convenience,
- Trust information sharing unit 506' for providing and delivering trust information accumulated through the automobile sharing service to another service and the third party,
- Automobile sharing policy management unit 503' for allowing to setup policies such as automobile/rent charge discounts and provided options according to user trust grade and automobile trust grade. In the contract violation situations, such as smoking detection, drinking, vibration occurrence, gas leakage, temperature abnormality, incomplete door lock, and the like, collected through sensors by the automobile status analysis unit 403' of the automobile management system 400', the automobile sharing policy management unit 503' has a function for setup of an automobile management policy such as whether to notify the provider and the user immediately, or whether to notify the provider and the user when the accumulated number of times is exceeded.

Such automobile reservation/management related functions may be placed in one physical system or may be distributed in various physical systems according to the implementation method, and the arrangement method thereof may be changed.

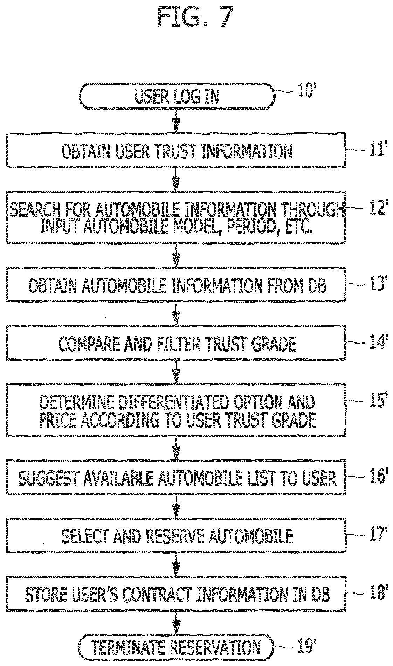

FIG. 7 shows an automobile reservation procedure using the automobile reservation system 200' of FIG. 6. The description of each procedure is similar to the case of accommodations in FIG. 3 and thus will be omitted.

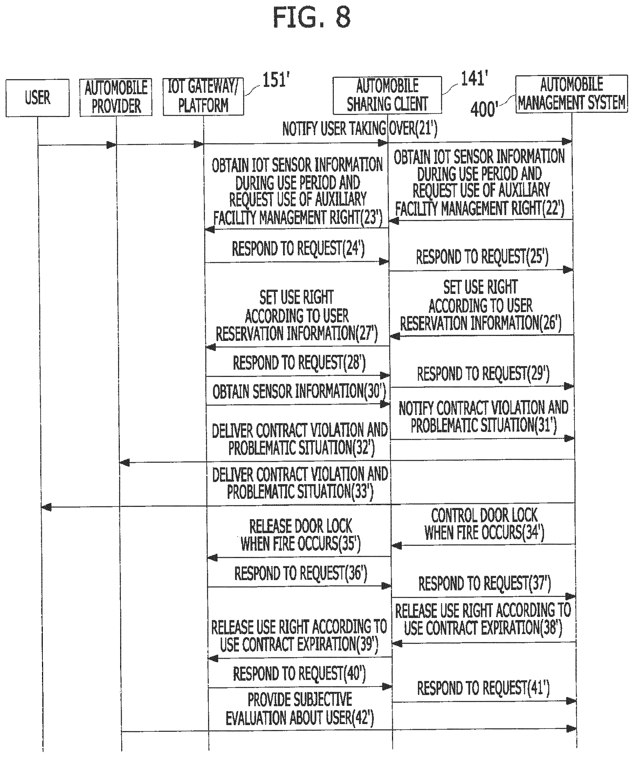

FIG. 8 illustrates a procedure of controlling and managing the IoT-based smart automobiles 100', 110' and 120' through the automobile management system 400', and explains the transaction flow between a user, an automobile provider, the IoT gateway/platform 151' or the smart home controller 131' in automobile, the automobile sharing client 141', and the automobile management system 400'.

After completing an automobile use contract according to the procedure shown in FIG. 7, a user takes over a car on the contracted date. The user's car takeover may be processed through a method in which a user or a provider changes a configuration setup into 'car takeover' by manually operating the automobile-provider-specific monitoring/management unit 404' of the automobile management system 400' or the user-specific automobile use history monitoring/management unit 406'; or an automatic method such as user's face recognition through camera shooting of the anti-theft door lock 101', NFC or Bluetooth beacon message reception and acceptance, and QR code and bar-code recognition. In the case of automatically detecting the user's car takeover through the anti-theft door lock 101', such takeover information is notified to the automobile management system 400' through the IoT gateway/platform 151' and the automobile sharing client 141' (21).

When the user's car takeover is confirmed, the automobile management system 400' acquires, using the automobile sharing client 141' and the IoT gateway/platform 151', sensor data for contract violation and safety status management from the corresponding automobile during the automobile use contract period of the user, and delivers a request for use of management authority (or right) to manage auxiliary facilities to the IoT gateway/platform 151' through the automobile sharing client 141' (23').

Upon receiving (25') a response to the request through (24') the automobile sharing client 141' from the IoT gateway/platform 151', the automobile management system 400' is allowed to acquire data from the automobile and to remotely manage the auxiliary facilities during the user's use period. The automobile management system 400' transmits a use right setup message of the automobile according to the user reservation information (26', 27'). At this time, in order to obtain user reservation information, the automobile management system 400' retrieves the use period, automobile return time, permitted auxiliary facility information (e.g., no smoking, no drinking, safe driving compliance, door/window lock, and the like) of the corresponding user from the reservation information management database 301' of the automobile management database 300'. Based on such contract information, the automobile management system 400' acquires the sensor data for contract violation and safety status management during the automobile use contract period of the user and transmits a use right setup message for auxiliary facilities, through the automobile sharing client 141' and the IoT gateway/platform 151'.

If the setup for sensor/auxiliary facility use in the automobile is performed successfully, the results are notified to the automobile management system 400' (28', 29'), and thereafter, the user may be permitted to use or prevented from using the corresponding auxiliary facilities according to the use contract.

The sensor data (or sensor information) sensed from the sensors of the automobile is transmitted from the IoT gateway/platform 151' to the automobile sharing client 141' (30'). The automobile sharing client 141' does not deliver all sensor data to the automobile management system 400', but performs filtering or preprocessing based on automobile use contract information, thereby notifying the automobile management system 400' of only information and problematic situations corresponding to the contract violation details (31').

If notified of the contract violation information or the security incident situations, the automobile management system 400' delivers this to the automobile provider and the user through a mobile terminal and PC (32', 33'). For example, in the situation that a fire occurs, the automobile management system 400' transmits a control signal for unlocking doors and opening windows, and operating fire extinguishing facility in the automobile to the automobile sharing client 141' (34'), and the automobile sharing client 141' instructs the IoT gateway/platform 151' to open the doors and the windows or operate fire extinguishing facility, etc. (35'). A response signal for such a control request may be transmitted from the IoT gateway/platform 151' to the automobile sharing client 141' (36'), or may be transmitted from the automobile sharing client 141' to the automobile management system 400' (37').

When the use contract expires or the user returns the automobile, the automobile management system 400' transmits a use right release setup message to the automobile sharing client 141' and the IoT gateway/platform 151' to cancel or release the automobile use permission setup given to the corresponding user (38'). This message is transmitted to the IoT gateway/platform 151' of the automobile through the automobile sharing client 141' (39').

In response to the use right release setup message, both the user's automobile use and the auxiliary facility use right are all prevented. At this time, a response signal to the use right release setup message may be transmitted to the automobile sharing client 141' and the automobile management system 400' (40', 41').

The automobile provider may input, through the automobile-provider-specific monitoring/management unit 404' of the automobile management system 404', subjective evaluation information about whether the user uses the auxiliary facilities of the automobile during the rental period (42').

As a possible additional configuration, the user may register a photograph or video of the facilities, inside, or outside of the automobile when taking over and returning the automobile, through the user-specific automobile use history monitoring/management unit 406' of the automobile management system 400'. The user-specific automobile use history monitoring/management unit 406' analyzes and stores differences between the photograph or video registered when the user takes over and returns an automobile by utilizing image processing functions such as image object recognition and comparison, and utilizes this as proof of dispute arbitration in the case of loss or damage in the automobile. Likewise, the automobile provider may also register the photograph or video of the inside and the outside of the automobile before and after the user's taking over and returning of the automobile, through the automobile-provider-specific monitoring/management unit 404'. Thereby, the provider easily identifies problems such as loss or damage through automated photo analysis and uses them as evidence when a dispute arises.

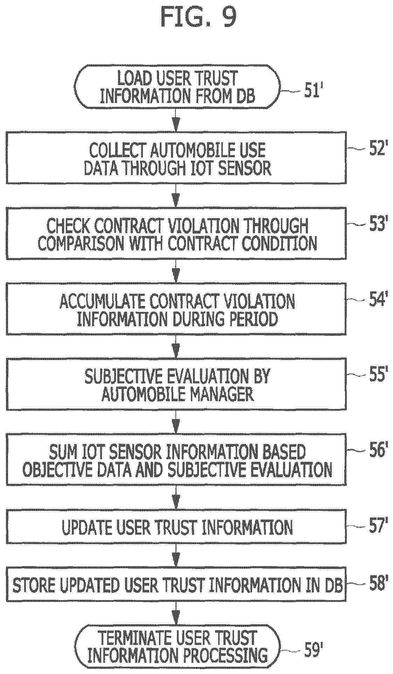

FIG. 9 shows a procedure of calculating and updating a trust grade of a user based on a contract violation while the user is using an automobile.
- Existing trust information for the user is loaded from the user trust information management database 302' of the automobile management database 302' (5 1').
- During the automobile use period, data on smoking, drinking, safe driving, door/window lock, and energy usage collected from sensors and the like are collected and transmitted to the automobile management system 400' (52').
- The contract violation and safety management violation details in comparison to the contract contents are analyzed in the automobile management system 400' (53') and are accumulated in the automobile management system 400' (54').
- After the user returns the automobile, the automobile provider provides a subjective evaluation score for cleanness and the like of user's automobile use (55').
- The automobile management system 400' sums up objective evaluation information about contract and safety management violations identified through IoT sensors and auxiliary facilities and the subjective evaluation score fed back from the provider to calculate the evaluation score for the automobile use (56').
- The trust information and the updated trust information calculated in the automobile use are recorded and managed in the user trust information management database 302' of the automobile management database 300' (58'). The user trust information in the user trust information management database 302' may be used when the corresponding user makes an automobile use reservation in the future, thereby providing differentiated trust-based automobile sharing. Further, the user trust information in the user trust information management database 302' is provided to the third party or other services through the user's agreement, so that user's trust-based linked service utilization is possible.

The following is a comprehensive example of a trust evaluation method for users of accommodations or automobile.
- Calculation with subjective evaluation (40%) + objective user evaluation (60%)
- Subjective Evaluation: User trust information is evaluated by assigning a weight (× evaluator trust grade) to the evaluation graded by an accommodations or automobile provider with high trust grade.
- Objective User Evaluation: Analyzed by objective accommodations or automobile use data collected through a smart home controller or an auxiliary facility controller in accommodations or automobile: [Example 1] stay rule violation (40%) of quietness and smoking by contract, safety management violation (40%) of incomplete door lock and gas leakage, and use right violation (20%) of Internet and auxiliary facility; [Example 2] use rule violation (40%) of safe driving and smoking by contract, safety management violation (40%) of incomplete door lock, and use right violation (20%) of auxiliary facility.
- Calculation of {n/(n+1)}×{(Subjective Evaluation)+(Objective Evaluation) to reflect the number of accommodations or automobile uses through an accommodations or automobile sharing service system.

In addition, the following is an example of a trust evaluation method for accommodations or automobile.
- Acquisition of feedback information from the user: For evaluation graded by a user with high trust grade, trust information evaluation is calculated by assigning a weight (× evaluator trust grade).
- The user trust grade may be increased or reduced, as a trust grade calculated through the use of accommodations or automobiles is accumulated in the existing trust grade that a corresponding user owns (see 57 in FIG. 5). In the case of a first user, since there is no existing trust grade, the initial value may set to a medium value (for example, grade 3 among grades 1 to 5), or trust information about a corresponding user received from a third party or another service through the trust information sharing unit 506 of the accommodations or automobile sharing operation management system 500 may be used as an initial value.

Although the present invention has been described with reference to the embodiments of accommodations/office and automobile resources, it is apparent that the technical scope of the present invention may be applied to other resources such as bicycles, various facilities, instruments, furniture, and the like.

According to the present invention, in relation to sharing economy services for accommodations, office, automobiles, bicycles, equipment, instruments, tools, furniture, and the like with applied IoT, smart home functions (for accommodations/offices) or ADAS functions (for automobiles), while a user has a short-term lease of resources, it may be managed through a resource management system whether the resources are used with being conformed to the contract terms or whether or not they are utilized without safety problem in accordance with the contract.

In addition, by controlling auxiliary facilities or devices (air conditioner, pay channel, WIFI, parking lot, black box, navigation, and the like) in the resource to be automatically set and released so that a user utilizes them in accordance with the contract conditions, it is possible to reduce the burden on the user.

Furthermore, the resource provider and the user may easily grasp the utilization status of the corresponding resource through a monitoring function, and quickly deal with a problem through a mobile terminal and the like when the problem occurs.

Rewards such as rate discounts and option changes are provided for future service provision and use, through trust information accumulated and updated for users and resources. This allows resource users to use resources cleanly and safely and provide motivation on user and resource management efforts to resource providers, so that it is possible to enable trust-based virtuous circle ecosystem.

In addition, if necessary, by sharing the trust information of the user, accumulated through the trust-based resource sharing service, with other services and the third party through the trust information sharing function, trust services may be linked and spread.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A method of performing a resource sharing transaction between a provider of a resource and a user of the resource, wherein the resource sharing transaction comprises:
setting, when the provider provides the resource, a minimum user trust grade necessary for a use permission of the user;
comparing the user trust grade set by the provider with a trust grade of a user to use the resource; and
controlling, in response to the comparison result, use of the resource.

2. The method of claim 1, wherein the controlling use of the resource of the resource sharing transaction comprises:
limiting, if the trust grade of the user to use the resource is lower than the user trust grade set by the provider, the use of the resource of the user to use the resource.

3. The method of claim 1 or 2,
wherein the resource comprises an auxiliary facility; and wherein the controlling use of the resource of the resource sharing transaction further comprises:
controlling an operation of the auxiliary facility according to the user trust grade set by the provider.

4. The method of claim 1, 2, or 3, wherein the resource sharing transaction further comprises:
allowing the provider to check a status in which the user uses the resource.

5. A method of performing resource sharing transaction between a provider of a resource and a user of the resource, wherein the resource sharing transaction comprises:
generating and managing a trust grade of a user using the resource;
generating and managing a trust grade of the resource; and
controlling use of the resource based on the user trust grade and the resource trust grade.

6. The method of claim 5, wherein the resource comprises an auxiliary facility; and wherein the controlling use of the resource of the resource sharing transaction further comprises:
controlling an operation of the auxiliary facility according to the user trust grade set by the provider.

7. The method of claim 5 or 6, wherein the resource sharing transaction further comprises:
allowing the provider to check a status in which the user uses the resource.

8. A trust-based resource sharing system comprising:
a resource including a sensor and an auxiliary facility;
a resource management system configured to perform resource sharing transaction between a provider of the resource and a user of the resource; and
a resource use reservation system comprising a trust-based resource permission setup unit configured to set, when the provider provides a resource, a minimum user trust grade necessary for a use permission of the user; compare the user trust grade set by the provider with a trust grade of a user to use the resource; and control, in response to the comparison result, use of the resource.

9. The trust-based resource sharing system of claim 8, wherein the resource management system comprises:
a resource-provider-specific monitoring/management unit further configured to perform a function of allowing the provider to check a status in which the user uses the resource after performing the processing of the resource sharing transaction.

10. The trust-based resource sharing system of claim 8 or 9, further comprising:
a resource sharing operation management system configured to manage the resource management system collecting data from the auxiliary facility and the sensor of the resource for management of the resource when the user uses the resource, and controlling the auxiliary facility and the sensor.

11. The trust-based resource sharing system of one of claims 8 to 10, wherein the resource use reservation system further comprises:
a user and resource trust information acquisition unit configured to acquire trust information including a trust grade of a user; and
a resource use reservation management unit configured to obtain, in response to a resource search of a user, a list of resources through the user and resource trust information acquisition unit.

12. The trust-based resource sharing system of one of claims 8 to 11, wherein the resource management system further comprises:
a resource management interaction interface configured to obtain, from the resource registered by the resource use reservation system, data from the auxiliary facility and the sensor of the resource; and manage the resource to control a resource user permission of the user in linkage to the auxiliary facility and the sensor of the resource.

13. The trust-based resource sharing system of one of claims 8 to 12, wherein the resource management system further comprises:
a resource use status analysis unit configured to collect, from the resource, use status data of the resource; and analyze data from the auxiliary facility and the sensor of the resource to determine whether contract violation, resource failure, and safety problem occurs.

14. The trust-based resource sharing system of claim 10, wherein the resource sharing operation management system comprises:
a resource sharing system monitoring unit configured to check whether the resource use reservation system and the resource management system operate normally.

15. The trust-based resource sharing system of claim 10, wherein the resource sharing operation management system comprises:
a user trust analysis management unit configured to generate and manage user trust information based on use status data accumulated while users use the resource and evaluation data provided from a provider; and
a resource trust analysis management unit configured to manage resource trust information generated based on data from the auxiliary facility and the sensor of the resource.
